# EUROPEAN PATENT SPECIFICATION

(11) **EP 1 362 775 B1**
(45) Date of publication and mention of the grant of the patent: **19.03.2008**
(21) Application number: 03006370.5
(22) Date of filing: 20.03.2003
(51) Int. Cl.: B62J 6/00, B62J 17/06

(54) **Mounting structure of front turn signal for motorcycles**
Befestigungsstruktur des vorderen Blinkers eines Motorrades
Fixation du clignotant avant d'une motocyclette

(30) Priority: 09.05.2002 JP 2002133542
(43) Date of publication of application: 19.11.2003
(73) Proprietor: HONDA GIKEN KOGYO KABUSHIKI KAISHA, Minato-ku, Tokyo (JP)
(72) Inventor: Otsubo, Mamoru, K. K. Honda Gijutsu Kenkyusho, Wako-shi, Saitama (JP); Tanaka, Jun, K. K. Honda Gijutsu Kenkyusho, Wako-shi, Saitama (JP); Yamaguchi, Masaaki, K. K. Honda Gijutsu Kenkyusho, Wako-shi, Saitama (JP)
(74) Representative: Liska, Horst

(56) References cited:
- EP-A- 0 972 702
- US-A- 4 515 405
- PATENT ABSTRACTS OF JAPAN vol. 018, no. 274 (M-1611), 25 May 1994 (1994-05-25) & JP 06 048344 A (YAMAHA MOTOR CO LTD), 22 February 1994 (1994-02-22)

## Description

The present invention relates to a motorcycle having front turn signals mounted on left and right leg shields respectively, and, more specifically, to an improved mounting structure of the front turn signals.

In JP-A-6-48344, on which the preamble of claim 1 is based, a leg shield is formed into a substantially inverted U-shape opened downward and disposed so as to straddle a front wheel, and front turn signals, which are to be disposed at a mating portion between a front top cover disposed above the leg shield and the aforementioned leg shield, are attached to the front top cover and the leg shield.

However, in the above-described technology in the related art, the mounting structure of the front turn signals is complex, and thus sometimes a gap is generated at the mating portion between the front top cover and the leg shield unless a margin of mounting error is strictly set.

In view of such circumstances, it is an object of the present invention to provide a mounting structure of front turn signals for a motorcycle, wherein the mounting structure of the front turn signal is simplified while enabling downsizing of the leg shield.

In order to solve the problem described above, according to claim 1, there is provided a motorcycle including front turn signals mounted on a left and a right leg shields respectively, wherein said leg shields provided independently on the left side and on the right side, each having a front wall facing toward the front and formed with an opening and a rear wall facing toward the rear formed as a single unit, are mounted to a main pipe side cover for covering a side face of a main pipe of a vehicle body frame, characterized in that the each front turn signal is attached to said leg shield by being accommodated in a hollow space of substantially triangle in lateral cross section defined by said front wall, said rear wall, and said main pipe side cover with a lens exposed through said opening.

In this arrangement, since the leg shields are provided independently on the left side and the right side and the front turn signals are attached to the leg shields, the mounting structure of the front turn signals may be simplified. In addition, since each front turn signal is accommodated in the hollow space of substantially triangle in lateral cross section defined by the main pipe side cover and the front wall and the rear wall of the leg shield, the front turn signal may be disposed by effectively utilizing a dead space, whereby the leg shield may be downsized.

The invention according to Claim 2 is, in addition to the construction of the invention as set forth in Claim 1, characterized in that a ridge line extending forward is formed on the upper portion of the aforementioned front wall, and the aforementioned opening is formed so as to crossover the ridge line. In this arrangement, the area of a lens may be increased, and thus the visibility may be improved.

The invention according to Claim 3 is, in addition to the construction as set forth in Claim 1 or 2, characterized in that a grommet is attached to a cable hole formed on the aforementioned main pipe side cover, a wiring cable connected to the aforementioned front turn signal passes through the aforementioned grommet and is drawn out to the aforementioned main pipe side, and the upper portions of the pair of left and right leg shields are covered by a front top cover. In this arrangement, waterproofing property of the front turn signal may be improved.
Referring to attached drawings, a mode for carrying out the present invention will be described based on an embodiment of the present invention.
Fig. 1 is a general side view of a motorcycle.
Fig. 2 is a side view of a vehicle body frame.
Fig. 3 is a plan view of the vehicle body frame.
Fig. 4 is an enlarged front view of the portion indicated by an arrow 4 in Fig. 1.
Fig. 5 is an enlarged front view of the motorcycle.
Fig. 6 is a cross sectional view taken along the line 6-6 in Fig. 5.
Fig. 7 is a cross sectional view taken along the line 7-7 in Fig. 5.
Fig. 8 is an exploded perspective view showing a main pipe side cover, a leg shield, an inner cover, a front top cover, and an under cover.
Fig. 9 shows the leg shield, in which the figures (A), (B), and (C) are a side view, a front view, and a top view, respectively.
Fig. 10 shows an inner shield, in which the figures (A) and (B) are a side view and a front view, respectively.
Fig. 11 shows the main pipe side cover, in which the figures (A) and (B) are a side view and a front view, respectively.
Fig. 12 is a cross sectional view taken along the line 12-12 in Fig. 5.
Fig. 13 shows the under cover, in which the figures (A), (B), and (C) are a side view, a front view, and a top view, respectively.
Fig. 14 is an enlarged drawing of the portion indicated by an arrow 14 in Fig. 4.
Fig. 15 is a cross sectional view taken along the line 15-15 in Fig. 14.
Fig. 16 is a cross sectional view taken along the line 16-16 in Fig. 14.
Fig. 17 is a perspective view showing the upper portion of the leg shield when viewed from the inside thereof.

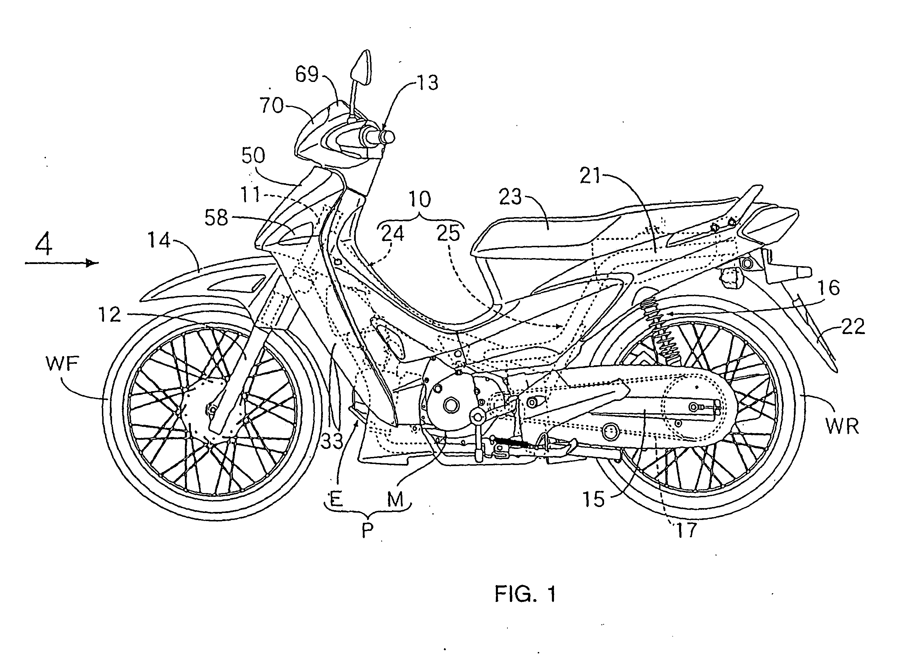

In Fig. 1, a front fork 12 rotatably supporting a front wheel WF is steerably supported by a head pipe 11 provided at the front end of a vehicle body frame 10 of the motorcycle. A bar handle 13 is connected to the upper end of the front fork 12, and a front fender 14 for covering upwardly of the front wheel WF is supported by the front fork 12.

A rear fork 15 for rotatably supporting a rear wheel WR is steerably supported at the midsection of the vehicle body frame 10, and a rear cushion 16 is provided between the rear portion of the vehicle body frame 10 and the rear fork 15.

A power unit P including an engine E and a transmission M is supported at the midsection of the vehicle body frame 10, and an output of the aforementioned transmission M is transmitted to the rear wheel WR via a chain 17.

An air cleaner 18 and a carburetor 19 disposed between the air cleaner 18 and the engine E are disposed upwardly of the engine E, and a fuel tank 20 disposed above the rear wheel WR is supported by the vehicle body frame 10.

The rear portion of the vehicle body frame 10 and the fuel tank 20 are covered by a rear vehicle body cover 21 formed of synthetic resin, which is mounted to the vehicle body frame 10, and a rear fender 22 for covering upwardly of the upper rear portion of the rear wheel is formed continuously from the rear vehicle body cover 21. A pillion seat 23 is disposed on the rear vehicle body cover 21, so that a driver can sit on the front half of the pillion seat 23.

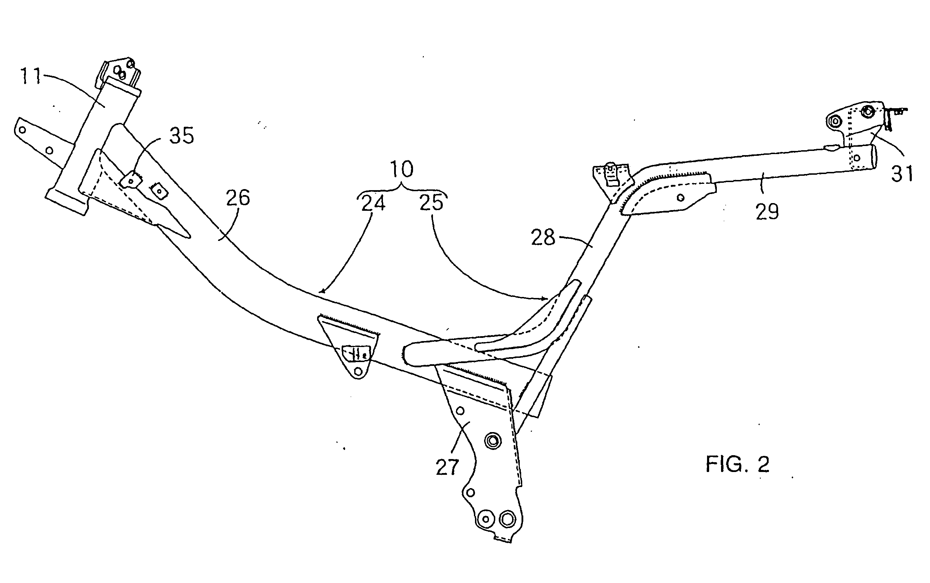

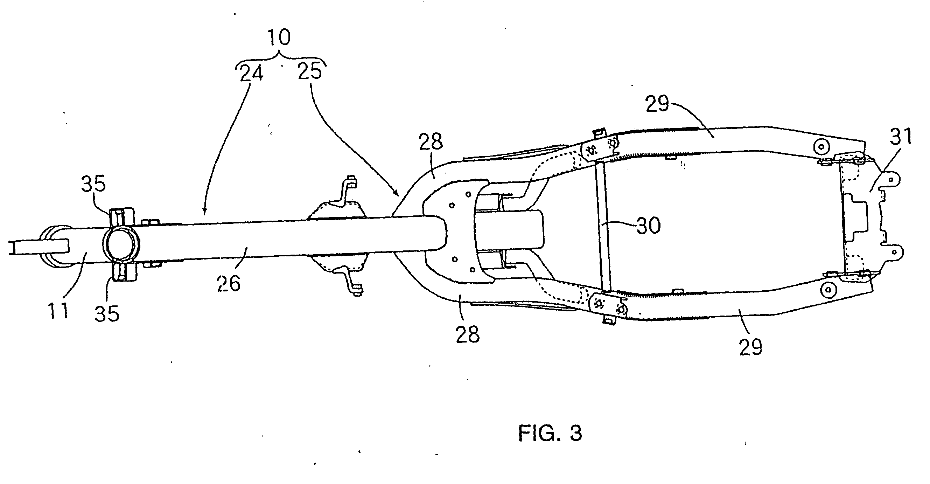

In Fig. 2 and Fig. 3, the vehicle body frame 10 includes a front frame 24 and a rear frame 25 integrally formed as a single unit. The front frame 24 includes a head pipe 11 at the front end thereof, and a main pipe 26 extending integrally from the head pipe 11 downward and rearward, and a power unit P is suspended at the lower end of the main pipe 26 and the lower end of a supporting frame 27 extending downward from the main pipe 26.

The rear frame 25 includes a pair of left and right rear pipes 28 and 28, and seat rails 29 and 29 formed continuously from and integrally with the rear ends of the rear pipes 28 and 28. The rear pipe 28 is secured at the front end thereof to the rear end of the main pipe 26 of the front frame 24 and extends rearward and upward, and the seat rail 29 is formed continuously from and integrally with the rear end of the rear pipe 28 and extends substantially horizontally. The front portions of the sea rails 29 and 29 are connected by a cross pipe 30, and the rear ends of the seat rails 29 and 29 are connected by a tail frame 31. The aforementioned pillion seat 23 is supported on a seat rail 11.

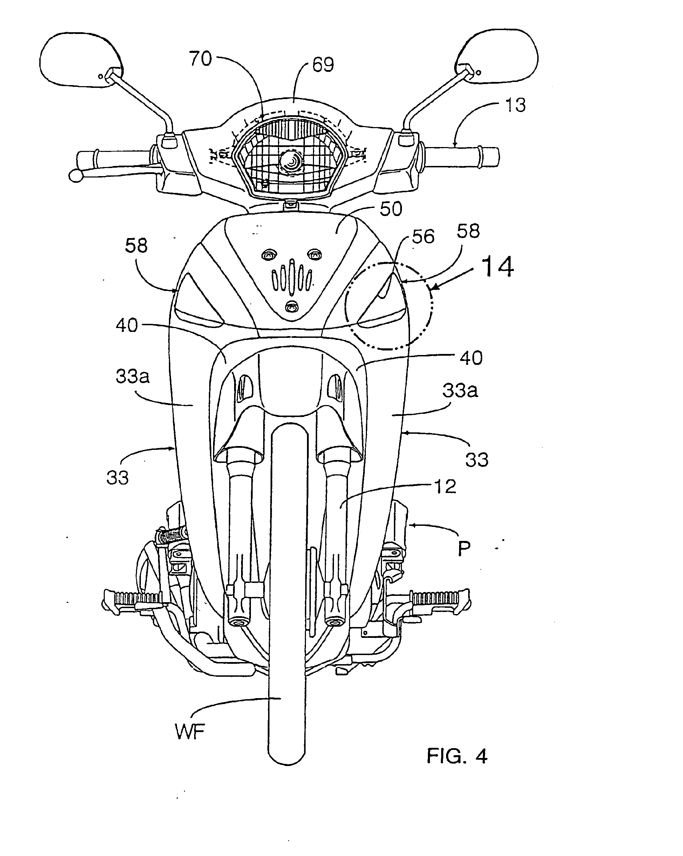

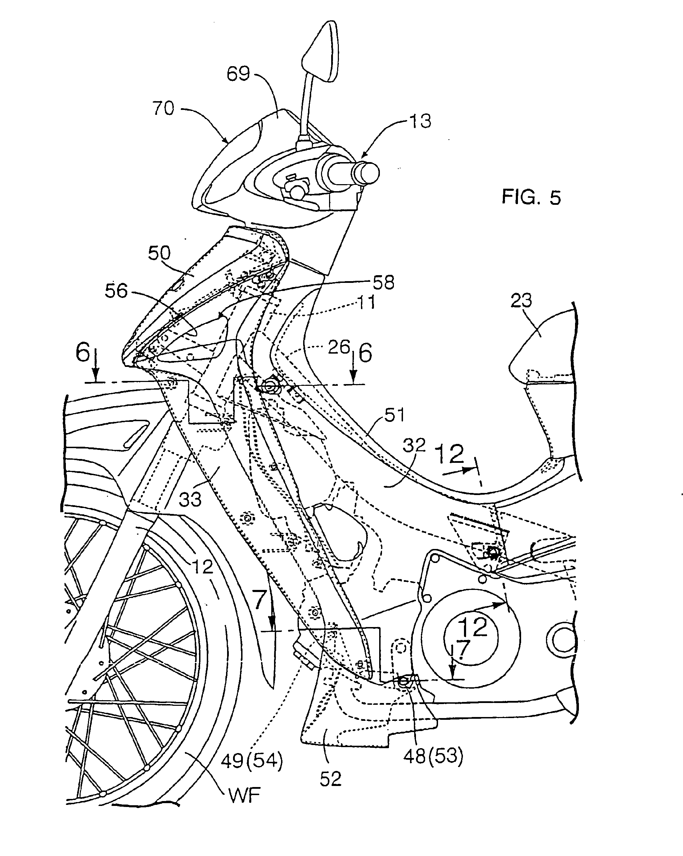

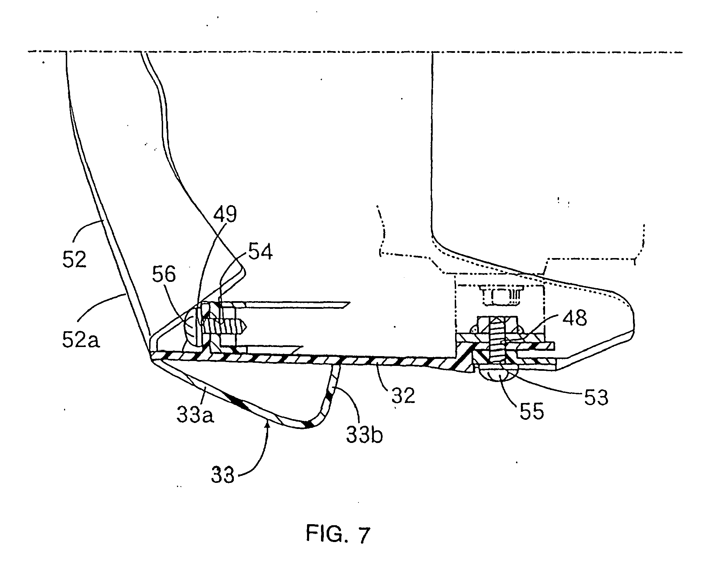

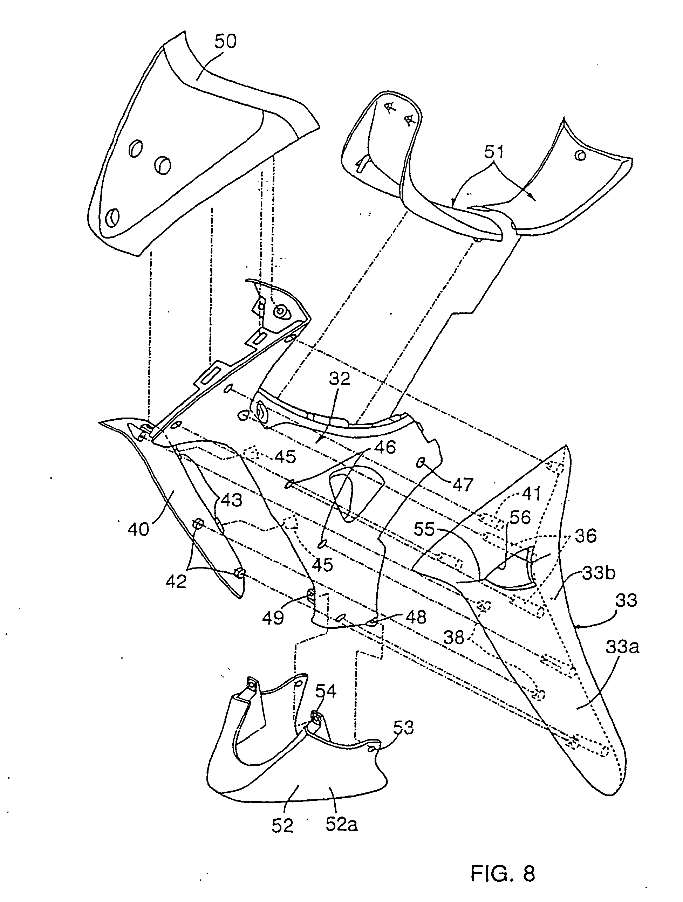

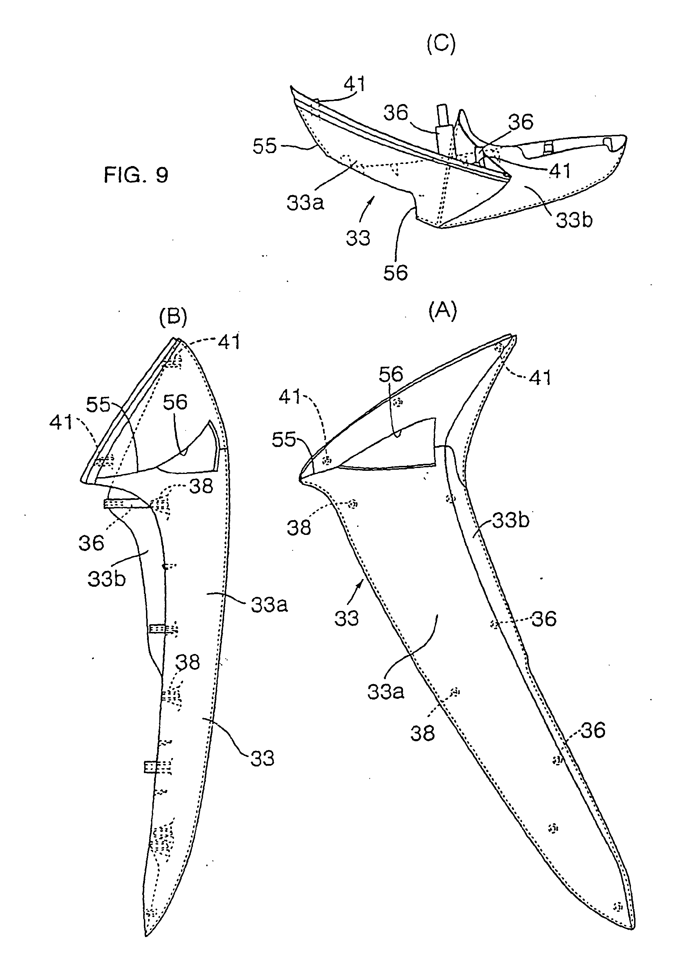

Referring also now to Fig. 4 to Fig. 9, independently formed left and right leg shields 33 and 33 are detachably and symmetrically mounted to the left side and the right side of the front portion of the front frame 24 of the vehicle body frame 10 via main pipe side covers 32.

A brackets 35.... project from both sides of the front portion of the main pipe 26 of the front frame 24 of the vehicle body frame 10, and the left and the right main pipe side covers 32, extending along the longitudinal direction so as to cover both side faces of the front portion of the front frame 24, are fixed to the aforementioned brackets 35... by connecting bolts 34...(See Fig. 3).

Since the pair of left and the right leg shields 33... have the same construction, one of those, that is, the construction of the left leg shield 33 will be described in detail below. The leg shield 33 includes a front wall 33a extending obliquely outward and facing toward the front so that the distance from the vehicle body frame 10 increases with the distance from the front end, and a rear wall 33b extending from the rear portion of the front wall 33a at an angle of about 45° toward the inside toward the vehicle body frame 10 and facing toward the rear so as to oppose to legs LE of a driver, and is formed vertically longitudinally of hard synthetic resin.

In addition, the shape of the leg shield 33 in lateral cross section is a V-shape with the angular tip faced outwardly of the vehicle body frame 10, and the opened side is faced toward the vehicle body frame 10. The leg shield 33 is gradually tapered from top to bottom and inclines toward the rear so that the bottom is positioned rearward with respect to the top.

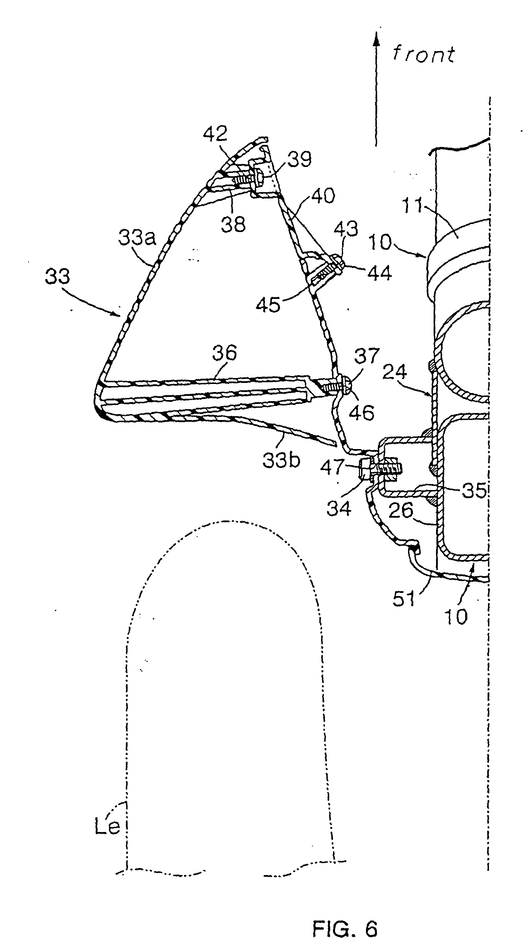

As is clearly shown in Fig. 6, the front wall 33a of the leg shield 33 is formed into a smooth convex shape projecting outward, and the inner surface of the rear wall 33b is formed into a concave shape bent toward the front, thereby ensuring free movement of the occupant's legs Le. In addition, the free edge of the rear wall 33b faces toward the outer surface of the main pipe side cover 32 with a small gap interposed therebetween.

In the vicinity of the joint portion between the aforementioned front wall 33a and the rear wall 33b on the inner surface of the leg shield 33, a plurality of elongated first mounting bosses 36, 36... are formed so as to extend toward the vehicle body frame 10 at intervals in the vertical direction. These mounting bosses 36, 36 ... are, as shown in Fig. 6, fixed to the main pipe side cover 32 with screw members 39....

The leg shield 33 solidly formed in this manner is not specifically complex in shape, and thus a desired rigidity may be secured. Simultaneously, a stereoscopic effect is achieved and thus the appearance is enhanced, thereby improving the quality.

In the vicinity of the front end of the front wall 33a on the inner surface of the leg shield 33, a plurality of second mounting bosses 38, 38... are formed so as to project toward the vehicle body frame 10 at intervals in the vertical direction. These second mounting bosses 38, 38... are, as shown in Fig. 6, fixed to an inner shield 40 with screw members 39....

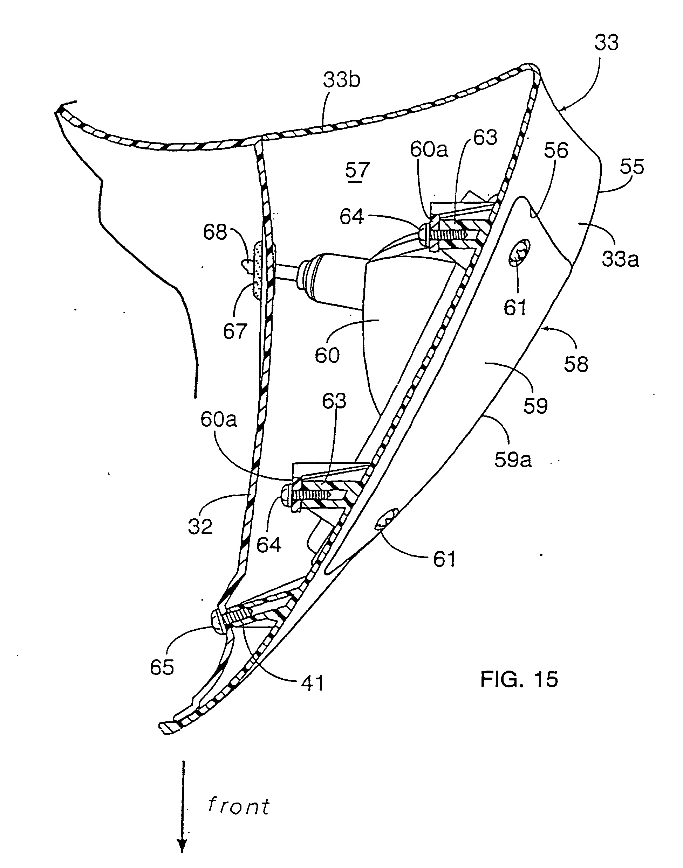

On the inner surface of the upper portion of the leg shield 33, there are formed a plurality of third mounting bosses 41, 41... projecting toward the vehicle body frame 10 at intervals in the fore-and-aft direction. These mounting bosses 41, 41... are secured to the main pipe side cover 32 via screw members 65...(See Fig. 15).

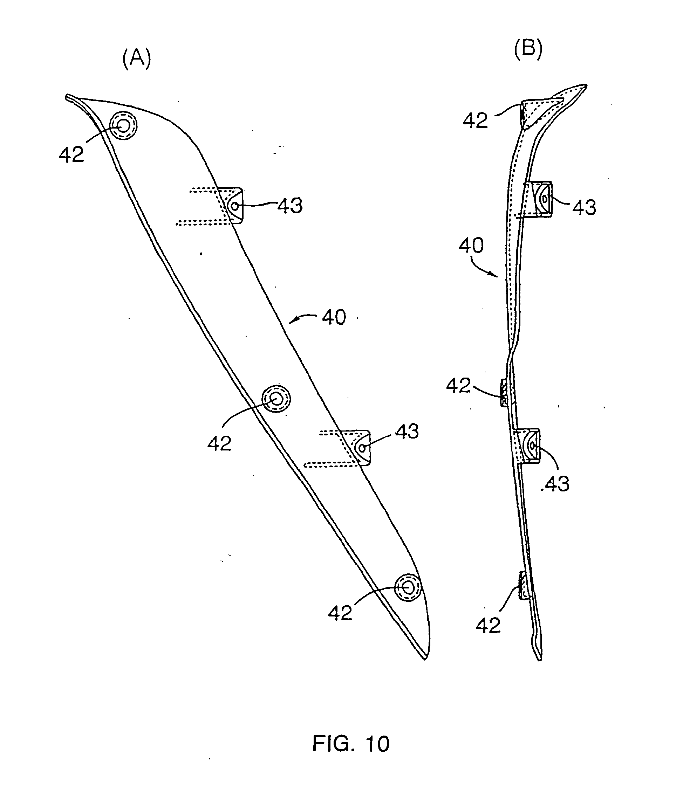

Referring also to Fig. 10, the inner shield 40 is formed of a vertically elongated plate of hard synthetic resin, which is the same material as the leg shield 33, so as to cover the front half of the openings of the leg shield 33 except for the upper portion. At the front edge of the inner shield 40, there are formed a plurality of front mounting holes 42... at intervals in the vertical direction, and at the rear edge of the inner shield 40, there are formed a plurality of rear mounting holes 43... at intervals in the vertical direction. The inner shield 40 is fixed to the front half of the inner opened side of the leg shield 33 except for the upper portion by screwing the screw members 39 inserted into the front mounting holes 42...into the aforementioned second mounting bosses 38.... The rear edge of the inner shield 40 is fixed to the main pipe side cover 32 by screw members 44... inserted into the rear mounting holes 43....

The leg shield 33 in a semi-assembled state with the inner shield 40 secured thereto is mounted to the main pipe 26 of the vehicle body frame 10 via the main pipe side cover 32, which enables easy assembly of the leg shield 33 to the vehicle body frame 10, and enhances the appearance by hiding the mounting portion from the outside.

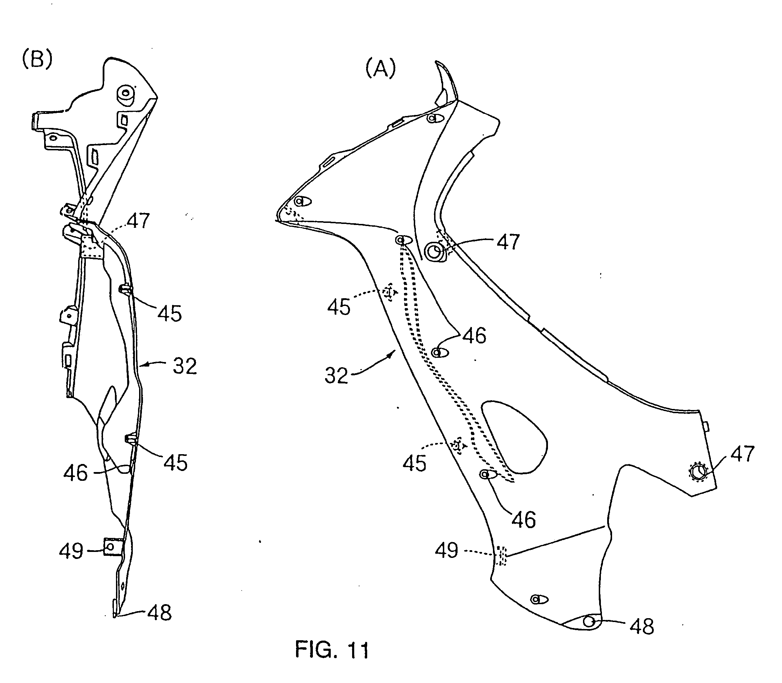

Referring now also to Fig. 11, the main pipe side cover 32 extends longitudinally of the vehicle body frame 10 along the side face thereof so as to cover the side face of the main pipe 26 of the front frame 24. The main pipe side cover 32 is formed with a plurality of mounting bosses 45... at the front edge thereof, and the rear end portion of the inner shield 40 is detachably secured to the mounting bosses 45... by the aforementioned screw members 43.... At the midsection of the main pipe side cover 32, there are formed mounting holes 46... at intervals in the vertical direction, and the leg shield 33 is secured to the main pipe side cover 32 by screwing screw members 37... inserted into these mounting holes 46... into the first bosses 36....

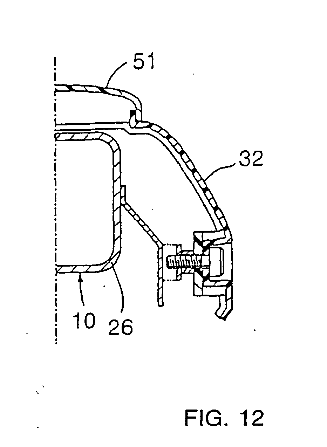

The upper edge of the main pipe side cover 32 is formed into a convex shape, and a front top cover 50 is fixed to the upper edge of the main pipe side cover 32. The rear edge of the main pipe side cover 32 is formed into a concave shape so as to lie along the upper surface of the main pipe 26, and a main pipe top cover 51 is fixed to the rear edge of the main pipe side cover 32 as shown in Fig. 12.

Since fixing means for fixing the front top cover 50 and the main pipe top cover 51 to the main pipe side cover 32 is the same as those known in the related art, detailed description will not be made.

The main pipe side cover 32 is formed with mounting holes 47... for mounting the same to the vehicle body frame 10 at the upper portion and the rear end portion of the rear edge thereof, and the main pipe side cover 32 is secured to the main pipe 26 by screwing screw members 34... inserted into the mounting holes 47... into the bracket 35 on the side surface of the main pipe 26. In addition, the main pipe side cover 32 is formed with mounting holes 48 and 49 for mounting an under cover 52 at the lower portion thereof.

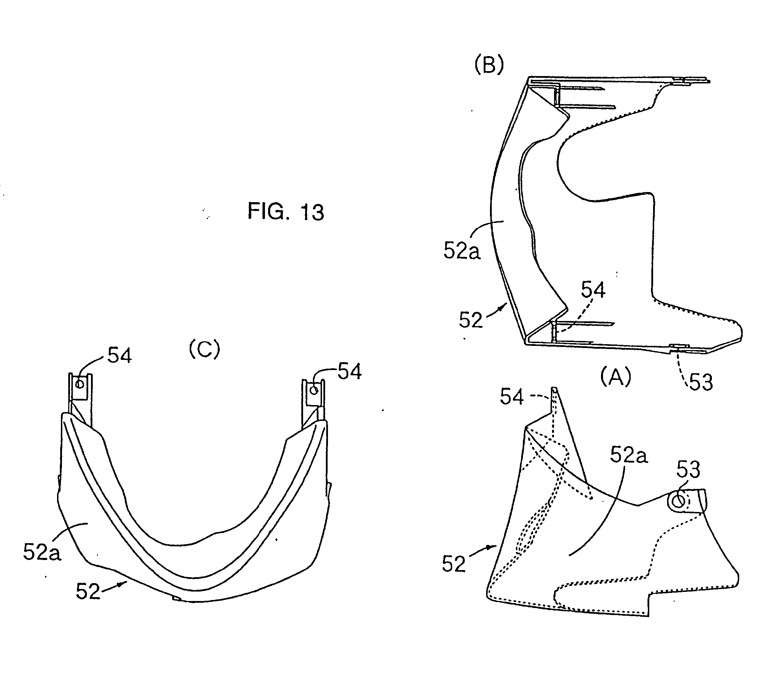

Referring now also to Fig. 13, the under cover 52 is detachably mounted to the lower edge of the main pipe side cover 32. The under cover 52 is formed so as to cover the front portion of the power unit P, and is used as needed by being mounted to the main pipe side cover 32, which is formed of the same material as the aforementioned leg shield 33 and the main pipe side cover 32.

The under cover 52 is formed into a U-shape opened toward the rear, both outer surfaces 52a are gradually opened from the front toward the rear with respect to the vehicle body frame 10, the outer surfaces are formed into a convex shape. The upper edge of the under cover 52 is formed with mounting holes 53 and 54, a screw member 55 inserted into the mounting hole 53 of the under cover 52 and the mounting hole 48 at the lower end of the main pipe side cover 32 is screwed into the main pipe 26, and a screw member 56 inserted into the mounting hole 54 of the under cover 52 and the mounting hole 49 formed at the lower end of the main pipe side cover 32 is screwed into the main pipe 26.

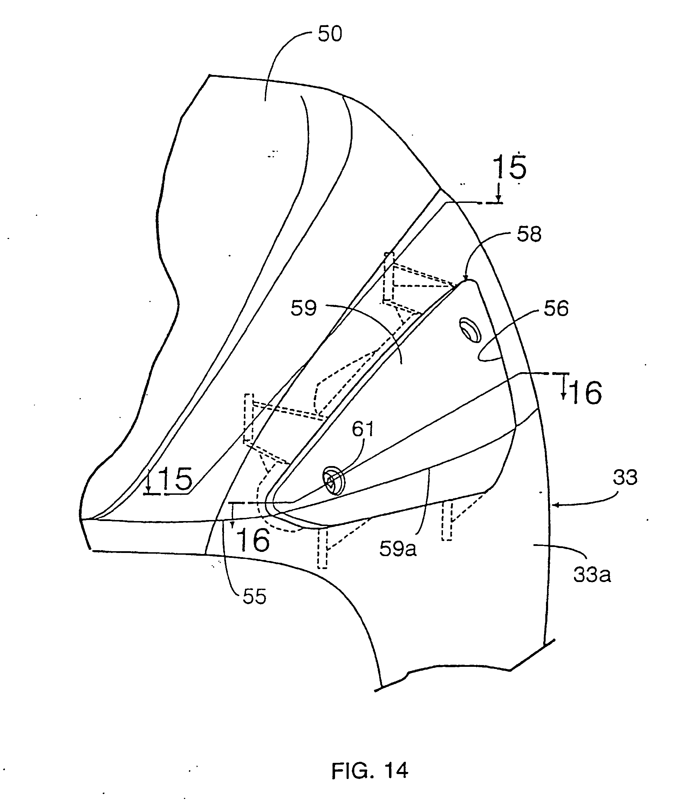

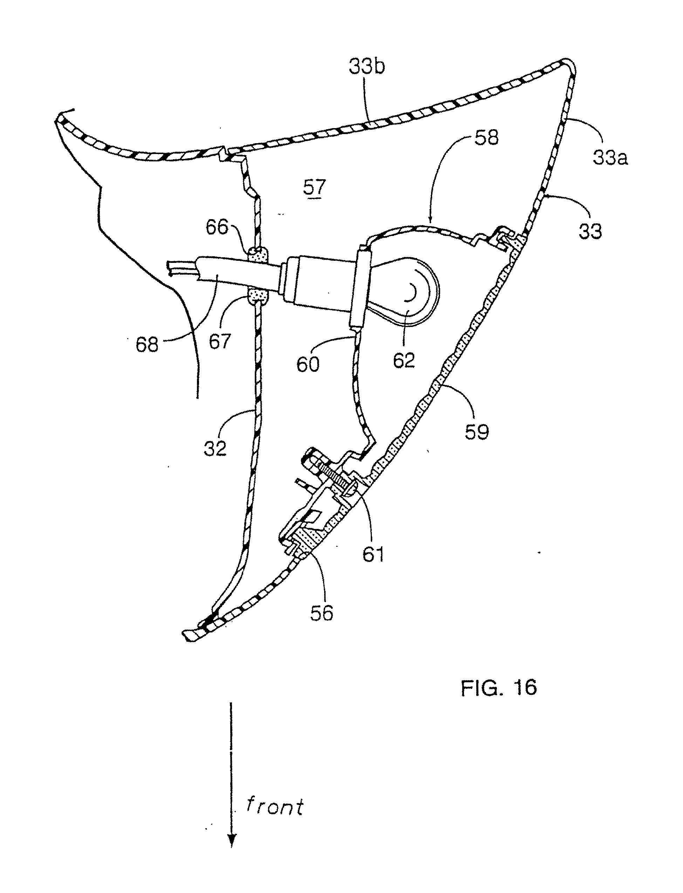

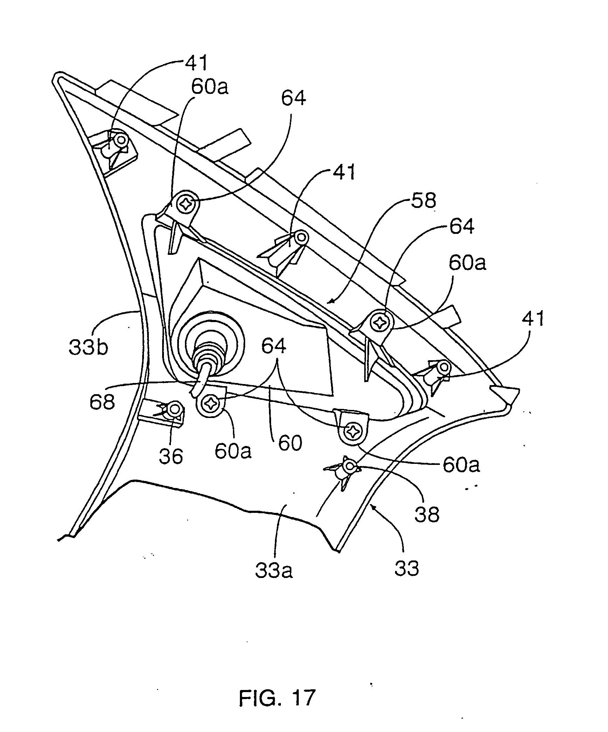

Referring also to Fig. 14 to Fig. 17, the upper portion of the front wall 33a of the leg shield 33 is formed with a convex ridge line 55 extending toward the front, and with an opening 56 so as to crossover the ridge line 55.

The front wall 33a and the rear wall 33b on the upper portion of the leg shield 33 and the main pipe side cover 32 define a hollow space 57 of substantially triangle in lateral cross section, and a front turn signal 58 to be stored in the aforementioned hollow space 57 is mounted to the leg shield 33 with a lens 59 exposed from the opening 56.

The front turn signal 58 includes a base 60 formed of synthetic resin supporting a bulb 62 and the lens 59 for covering the base 60 from the front, and the lens 59 having a ridge line 59a continuing from the ridge line 55 of the aforementioned leg shield 33 and being exposed from the opening 56 is attached to the aforementioned base 60 by a plurality of, for example a pair of screw members 61 and 61.

On the inner surface of the leg shield 33, there are formed with a plurality of mounting bosses 63, 63... around the aforementioned opening 56, and the base 60, that is, the front turn signal 58 is attached to the leg shield 33 with screw members 64 and 64 ... inserted through mounting arms 60a and 60a, which are formed integrally with the aforementioned base 60 so as to abut against the end of the mounting bosses 63 and 63, and screwed into the aforementioned mounting bosses 63 and 63.

The main pipe side cover 32 is provided with a cable hole 66, and a grommet 67 is attached to the cable hole 66. A wiring cable 68 continuing from the front turn signal 58 passes through the aforementioned grommet 67 and is drawn out to the main pipe 26 side.

The upper portions of the left and right leg shields 33... are covered by the front top cover 50, and a head light 70 is mounted at the center of the front surface of a handle cover 69, which is disposed above the front top cover 50 so as to cover the center portion of a bar handle 13.

The operation of the present embodiment will be described. The left and the right leg shields 33... formed independently and each having the front wall 33a with the opening 56 facing toward the front and the rear wall 33b facing toward the rear integrally formed therewith are attached to the main pipe side covers 32 ... for covering the side faces of the main pipe 26 of the vehicle body frame 10. Each front turn signal 58, which is to be attached to the leg shield 33 with the lens 59 exposed through the opening 56, is stored in the hollow space 57 of substantially triangle in lateral cross section defined by the front wall 33a, the rear wall 33b, and the main pipe side cover 32.

Therefore, in the construction in which the front turn signals 58... are mounted to the left and the right independently disposed leg shields 33... , the mounting structure of the front turn signals 58 may be simplified.

In addition, since the front turn signal 58 is stored in the hollow space 57 of substantially triangle in lateral cross section defined by the main pipe side cover 32 and the front wall 33a and the rear wall 33b of the leg shield 33, the front turn signal 58 may be disposed by utilizing a dead space effectively, whereby the leg shields 33... may be downsized.

Since the upper portion of the front wall 33a is formed with the ridge line 55 extending toward the front, and with the opening 56 so as to crossover the ridge line 55, and the lens 59 is exposed through the opening 56, the area of the lens 59 may be increased, and thus the visibility may be improved.

Since the grommet 67 is attached to the cable hole 66 formed on the main pipe side cover 32, the wiring cable 68 continuing from the front turn signal 58 passes through the grommet 67 and is drawn out to the main pipe 26 side, and the upper portion of the pair of left and right leg shields 33... is covered by the front top cover 50, waterproofing property of the front turn signal 58 may be improved.

This is to simplify the mounting structure of front turn signals and enable downsizing of leg shields in a motorcycle having the front turn signals on the left and right leg shields respectively.

In the invention, a leg shields 33 provided independently on the left side and on the right side, each having a front wall 33a facing toward the front and formed with an opening 56 and a rear wall 33b facing toward the rear formed as a single unit, are mounted to a main pipe side cover 32 covering the side face of a main pipe of a vehicle body frame, and a front turn signal 58 is attached to the leg shield 33 by being accommodated in a hollow space 57 of substantially triangle in lateral cross section defined by the front wall 33a, the rear wall 33b, and the main pipe side cover 32 with a lens 59 exposed through the opening 56.

## Claims

1. Motorcycle including front turn signals (58) mounted on a left and a right leg shields (33) respectively, wherein said leg shields (33) provided independently on the left side and on the right side, each having a front wall (33a) facing toward the front and formed with an opening (56) and a rear wall (33b) facing toward the rear formed as a single unit, are mounted to a main pipe side cover (32) for covering a side face of a main pipe (26) of a vehicle body frame (10),
**characterized in that** each front turn signal (58) is attached to said leg shield (33) by being accommodated in a hollow space (57) of substantially triangle in lateral cross section defined by said front wall (33a), said rear wall (33b), and said main pipe side cover (32) with a lens (59) exposed through said opening (56).

2. Motorcycle according to Claim 1, **characterized in that** a projecting ridge line (55) extending forward is formed on the upper portion of said front wall (33a), and said opening (56) is formed so as to crossover the ridge line (55).

3. Motorcycle according to Claim 1 or 2, **characterized in that** a grommet (67) is attached to a cable hole (66) formed on said main pipe side cover (32), a wiring cable (68) connected to said front turn signal (58) passes through said grommet (67) and is drawn out to said main pipe (26) side, and the upper portions of the pair of left and the right leg shields (33) are covered by a front top cover (50).

## Patentansprüche

1. Motorrad, umfassend vordere Blinker (58), welche an einer linken bzw. einer rechten Beinschutzverkleidung (33) angebracht sind, wobei die Beinschutzverkleidungen, welche unabhängig auf der linken Seite und auf der rechten Seite vorgesehen sind, wobei jede eine vordere Wand (33a), welche nach vorne gewandt ist und mit einer Öffnung (56) ausgebildet ist, und eine hintere Wand (33b), welche nach hinten gewandt ist, welche eine einzige Einheit bilden, aufweist, an einer Hauptrohr-Seitenverkleidung (32) zum Verkleiden einer Seitenfläche eines Hauptrohrs (26) eines Fahrzeug-Hauptkörperrahmens (10) angebracht sind,
**dadurch gekennzeichnet, daß** jeder vordere Blinker (58) **dadurch** an der Beinschutzverkleidung (33) angebracht ist, daß dieser in einem Hohlraum (57) mit einem im wesentlichen dreieckigen seitlichen Querschnitt, welcher durch die vordere Wand (33a), die hintere Wand (33b) und die Hauptrohr-Seitenverkleidung (32) definiert ist, aufgenommen ist, wobei eine Linse (59) durch die Öffnung (56) freiliegend angeordnet ist.

2. Motorrad nach Anspruch 1, **dadurch gekennzeichnet, daß** eine hervorstehende Gratlinie (55), welche nach vorne verläuft, an dem oberen Abschnitt der vorderen Wand (33a) ausgebildet ist und die Öffnung (56) derart ausgebildet ist, daß diese die Gratlinie (55) überquert.

3. Motorrad nach Anspruch 1 oder 2, **dadurch gekennzeichnet, daß** eine Durchführungsdichtung (67) an einem Kabelloch (66), welches an der Hauptrohr-Seitenverkleidung (32) ausgebildet ist, angebracht ist, wobei ein Leitungskabel (68), welches mit dem vorderen Blinker (58) verbunden ist, durch die Durchführungsdichtung (67) läuft und zu der Seite des Hauptrohrs (26) ausgezogen ist und die oberen Abschnitte des Paars der linken und der rechten Beinschutzverkleidung (33) durch eine vordere obere Verkleidung (50) verkleidet sind.

## Revendications

1. Motocyclette comprenant des clignotants avant (58) montés sur un protège-pieds gauche et un protège-pieds droit (33) respectivement, dans laquelle lesdits protège-pieds (33), prévus indépendamment sur le côté gauche et sur le côté droit, ayant chacun une paroi avant (33a) faisant face vers l'avant et formée avec une ouverture (56) et une paroi arrière (33b) faisant face vers l'arrière formée comme unique unité, sont montés sur un couvercle latéral du tube principal (32) pour recouvrir une face latérale d'un tube principal (26) d'un cadre de véhicule (10),
**caractérisée en ce que** chaque clignotant avant (58) est fixé audit protège-pieds (33) en étant logé dans un espace creux (57) de section transversale latérale essentiellement triangulaire définie par ladite paroi avant (33a), ladite paroi arrière (33b) et ledit couvercle latéral du tube principal (32) avec une lentille (59) apparente à travers ladite ouverture (56).

2. Motocyclette selon la revendication 1, **caractérisée en ce qu'**une ligne de renforcement (55) faisant saillie, s'étendant vers l'avant, est formée sur la portion supérieure de ladite paroi avant (33a), et ladite ouverture (56) est formée de manière à chevaucher ladite ligne de renforcement (55).

3. Motocyclette selon la revendication 1 ou 2, **caractérisée en ce qu'**une rondelle (67) est fixée à un trou de câble (66) formé sur ledit couvercle latéral du tube principal (32), un fil de câblage (68) raccordé audit clignotant avant (58) passe à travers ladite rondelle (67) et est prolongé vers ledit côté du tube principal (26), et les portions supérieures des deux protège-pieds gauche et droit (33) sont recouvertes d'un couvercle supérieur avant (50).
